(19) Europäisches Patentamt / European Patent Office / Office européen des brevets

(11) **EP 2 402 833 B1**

(12) **FASCICULE DE BREVET EUROPEEN**

(45) Date de publication et mention
de la délivrance du brevet:
**10.08.2016 Bulletin 2016/32**

(51) Int Cl.:
*F24D 19/10* *(2006.01)*    *G05D 23/19* *(2006.01)*

(21) Numéro de dépôt: **11169651.4**

(22) Date de dépôt: **10.06.2011**

(54) **Procédé de détection de l'ouverture et de la fermeture d'un ouvrant dans une pièce et dispositif de régulation thermique mettant en oeuvre ce procédé**

Verfahren zur Erfassung des Öffnungs- oder Schließzustands eines Öffnungsflügels in einem Zimmer, und Vorrichtung zur Wärmeregulierung, die dieses Verfahren verwendet

Method for detecting the opening and closing of an openable element in a room and thermal control device implementing said method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.07.2010 FR 1055336**

(43) Date de publication de la demande:
**04.01.2012 Bulletin 2012/01**

(73) Titulaire: **Atlantic Industrie**
**85000 La Roche sur Yon (FR)**

(72) Inventeur: **Hillairet, Teddy**
**85180 Le Château d'Olonne (FR)**

(74) Mandataire: **Petit, Maxime et al**
**Ipsilon**
**Le Centralis**
**63 Avenue du Général Leclerc**
**92340 Bourg-la-Reine (FR)**

(56) Documents cités:
**EP-A1- 1 160 552    FR-A1- 2 440 580**
**FR-A1- 2 812 073    FR-A1- 2 930 055**

**Description**

La présente invention concerne le domaine des dispositifs de régulation thermique, notamment des appareils de chauffage ou des climatiseurs. La présente invention se rapporte ainsi, en particulier, à un procédé de détermination de l'ouverture d'un ouvrant dans une pièce dans laquelle est installé un tel dispositif de régulation thermique, à un procédé de régulation énergétique du dispositif de régulation thermique et à un dispositif de régulation thermique mettant en oeuvre un procédé de détection de l'ouverture et de la fermeture d'un ouvrant dans une pièce.

Il est connu de la demande FR-A-2 812 073 un procédé de gestion de la puissance de chauffe d'un radiateur situé dans une pièce munie d'au moins une fenêtre ou porte consistant à :

- choisir un écart de température seuil ;
- mémoriser la température ambiante de la pièce pendant un premier intervalle de temps ;
- déterminer un écart de température entre l'instant présent et le début du premier l'intervalle de temps ;
- dès que l'écart de température devient supérieur à l'écart de température seuil, alors considérer qu'il y a ouverture d'une porte ou fenêtre et diminuer la puissance de chauffe du radiateur ;
- surveillez l'évolution de température dans la pièce pendant un deuxième intervalle de temps ; et
- si la température augmente pendant ce deuxième intervalle de temps, alors considérer que la porte ou fenêtre est refermée et augmenter la puissance de chauffe du radiateur.

Par ailleurs, il est connu de FR-A-2 871 332 un procédé de régulation automatique de la puissance d'appareils de chauffage comprenant un thermostat susceptible de commander au moins deux éléments chauffants afin de maintenir la température ambiante à une température de consigne, comprenant les étapes consistant à :

- à mesurer la température ambiante initiale à un instant initial et à la mémoriser ;
- à déclencher la mise en marche du premier élément chauffant appelé point chaud,
- à initialiser un compteur à zéro ;
- à mesurer la température ambiante à un instant postérieur à l'instant initial ;
- à tester si la différence entre les températures ambiantes à un instant postérieur et à l'instant initial est inférieure à un seuil, et à incrémenter le compteur d'une unité si c'est le cas ;

le fonctionnement du ou des éléments chauffant étant arrêté dès que le compteur atteint une valeur prédéfinie.

Les deux procédés décrits ci-dessus nécessitent que la consigne fournie à l'appareil de chauffage ou au radiateur soit constante. Par suite, ces procédés sont peu précis et ne permettent la détection de l'ouverture d'un ouvrant que dans un nombre limité de cas de figure.

Dans les appareils de chauffage modernes, la consigne est définie classiquement en fonction de nombreux paramètres comme une requête d'un utilisateur, une détection de présence d'utilisateurs ou une loi de programmation. La consigne est ainsi modulée de manière à s'adapter au mieux à la situation. Ainsi, la consommation énergétique de ces appareils de chauffage est adaptée au besoin réel en chauffage.

Il est connu du document FR 2 930 055 un procédé d'équilibrage de puissance d'un dispositif de chauffage et du document FR 2 440 580 un appareil de régulation de chauffage avec limitation de puissance consommée. Il est enfin connu du document EP 1 160 552 A1 un procédé de reconnaissance de l'ouverture d'une fenêtre dans une pièce comportant un appareil de chauffage par analyse temporelle et fréquentielle de la température ambiante.

Les procédés de l'art antérieur décrits précédemment sont ainsi peu exploitables dans de tels appareils de chauffage.

Le but de la présente invention est de fournir un procédé permettant de détecter l'ouverture d'un ouvrant, c'est-à-dire d'une porte ou d'une fenêtre de la pièce, de manière précise et sans nécessité de capteurs à l'extérieur de l'appareil mettant en oeuvre le procédé. L'invention vise également à permettre la détection de l'ouverture ou de la fermeture d'un ouvrant, même en cas de modification de la consigne de l'appareil mettant en oeuvre le procédé. Enfin, l'invention vise à proposer un procédé qui puisse être mis en oeuvre dans un appareil de chauffage électrique dont la consigne de fonctionnement est définie en fonction de nombreux paramètres variables comme une loi de programmation, une détection de présence d'utilisateur, une requête d'un utilisateur et/ou une combinaison de ces paramètres.

A cette fin, la présente invention propose un procédé de détermination de l'ouverture d'un ouvrant selon la revendication 1.

Suivant des modes de réalisation préférés, l'invention comprend une ou plusieurs des caractéristiques des revendications dépendantes 2 à 9.

L'invention se rapporte également à un procédé de régulation énergétique selon la revendication 10.

L'invention concerne encore un dispositif de régulation thermique selon la revendication 11.

De préférence, le dispositif de régulation thermique est choisi parmi :

- un appareil de chauffage, notamment un appareil de chauffage électrique ;
- un climatiseur ; et
- une combinaison de ceux-ci.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente schématiquement un algorithme de détection d'ouverture et de fermeture d'un ouvrant dans une pièce.

Les figures 2, 3, 4 5 et 7 représentent chacune de manière plus précise un détail de l'algorithme de la figure 1.

La figure 6 représente un algorithme de détection d'ouverture d'ouvrant, mis en oeuvre dans l'algorithme de la figure 5.

La figure 8 représente un algorithme de réinitialisation mis en oeuvre dans les algorithmes des figures 2, 6 et 7.

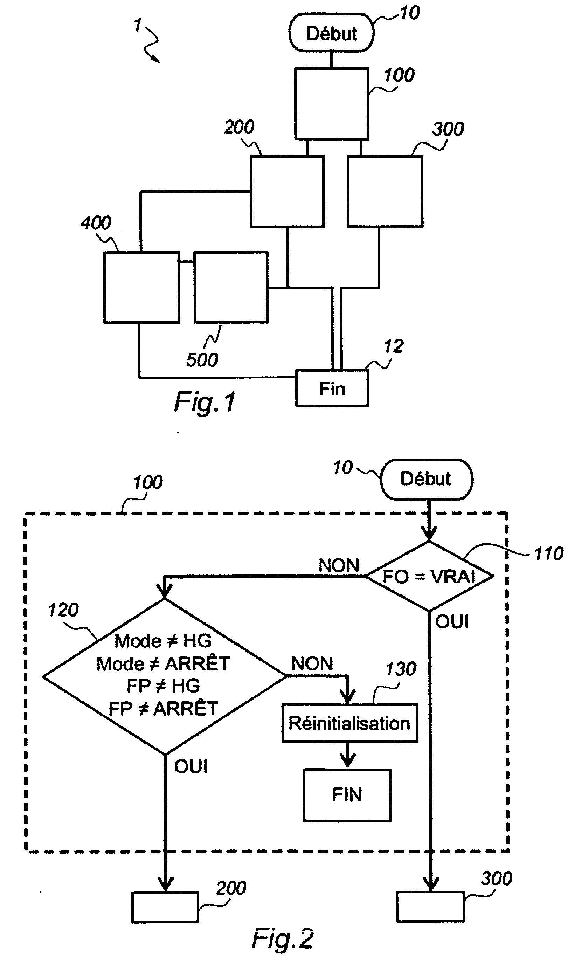

La figure 1 représente schématiquement un algorithme de détection d'ouverture et de fermeture d'un ouvrant dans une pièce. Par ouvrant, on entend une porte ou une fenêtre, notamment dans le cas où elle donne sur l'extérieur d'un logement. En effet, dans ce cas, l'ouverture de l'ouvrant peut provoquer des déperditions thermiques importantes. Il peut s'avérer alors souhaitable de limiter la consommation énergétique d'un appareil de régulation thermique.

L'algorithme 1 de détection d'ouverture et de fermeture d'un ouvrant peut être mis en oeuvre au moyen d'un appareil de régulation thermique, notamment un appareil de chauffage, par exemple électrique, ou un climatiseur. A fin de clarté, dans la suite de la description, on considère le cas où l'algorithme 1 de détection d'ouverture et de fermeture d'un ouvrant est mis en oeuvre dans un appareil de chauffage électrique.

Pour mettre en oeuvre l'algorithme 1 de détection d'ouverture et de fermeture d'un ouvrant, l'appareil de régulation thermique comprend au moins un élément chauffant adapté à être commandé en fonction d'une unité électronique de commande mettant en oeuvre l'algorithme 1 de détection d'ouverture et de fermeture d'un ouvrant. L'appareil de régulation thermique comprend encore un capteur de la température ambiante.

Aucun capteur extérieur à cet appareil de régulation thermique n'est nécessaire. Notamment un détecteur d'ouverture ou de fermeture d'ouvrant du type « contact de feuillures » tel que décrit dans l'art antérieur n'est pas nécessaire.

L'algorithme 1 de détection d'ouverture et de fermeture d'un ouvrant est régulièrement relancé automatiquement, par exemple toutes les 40 s.

L'algorithme 1 de détection d'ouverture et de fermeture d'un ouvrant comporte une première étape de début 10.

L'algorithme de la figure 1 peut alors être divisé en cinq algorithmes ou blocs principaux. Le premier bloc 100 consiste en différents tests basiques, en fonction desquels l'algorithme peut se poursuivre à travers un bloc de décision 200 ou un bloc de détection de fermeture 300. En fonction de la sortie du bloc de décision 200, l'algorithme peut se poursuivre à travers un premier bloc 400 de détection d'ouverture lors d'un accroissement de consigne et éventuellement à travers un deuxième bloc 500 de détection d'ouverture lors d'une diminution de la consigne.

Initialement, avant la première exécution de l'algorithme 1 de détection d'ouverture et de fermeture d'un ouvrant, les valeurs de variables sont définies :

- la valeur d'un bit FO, représentatif d'une détermination d'ouverture d'un ouvert, est définie comme étant égale à FAUX ;
- la valeur d'un bit FF (pour « Fenêtre Fermée »), représentatif d'une détermination de fermeture d'un ouvert, est définie comme étant égale à FAUX;
- un compteur CPT_FO_A est défini comme étant égal à 0 ;
- un compteur CPT_FO_B est défini comme étant égal à 0 ;
- la valeur d'un bit TIMEOUT_FO est définie comme étant égale à FAUX;
- la valeur d'un bit CHANGE_CONS, représentatif d'une modification de la consigne de l'appareil de chauffage, est définie comme étant égale à VRAI ;
- la valeur du bit INIT_GLITCH est définie comme étant égale à FAUX. Le premier bloc 100 de tests basiques est illustré en détails sur la figure 2.

A la suite du début 10, cet algorithme de tests basiques 100 comprend une première vérification 110 concernant le bit FO représentatif de la détection de l'ouverture d'un ouvrant.

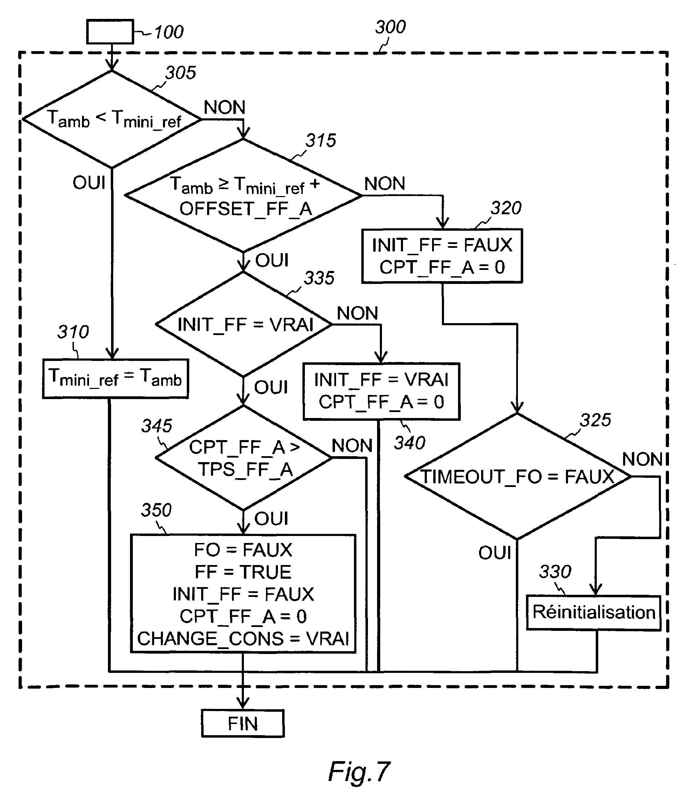

Si ce bit a une valeur égale à VRAI, alors il a été détecté au cours d'une exécution précédente de l'algorithme 1 de détection d'ouverture et de fermeture d'un ouvrant qu'un ouvrant est ouvert dans la pièce. Il n'est plus nécessaire alors de déterminer une ouverture, si bien que l'algorithme 1 de détection d'ouverture et de fermeture d'un ouvrant se poursuit alors par le bloc 300 de détection de fermeture d'un ouvrant. Ce bloc 300 de détection de fermeture d'un ouvrant sera décrit plus en détails ultérieurement, en regard de la figure 7.

Si par contre le bit FO a une valeur égale à FAUX, alors l'ouverture d'un ouvrant n'a pas encore été détectée. Dans ce cas, l'algorithme 100 se poursuit par une deuxième étape de test 120. Cette deuxième étape de test 120 comporte quatre vérifications différentes.

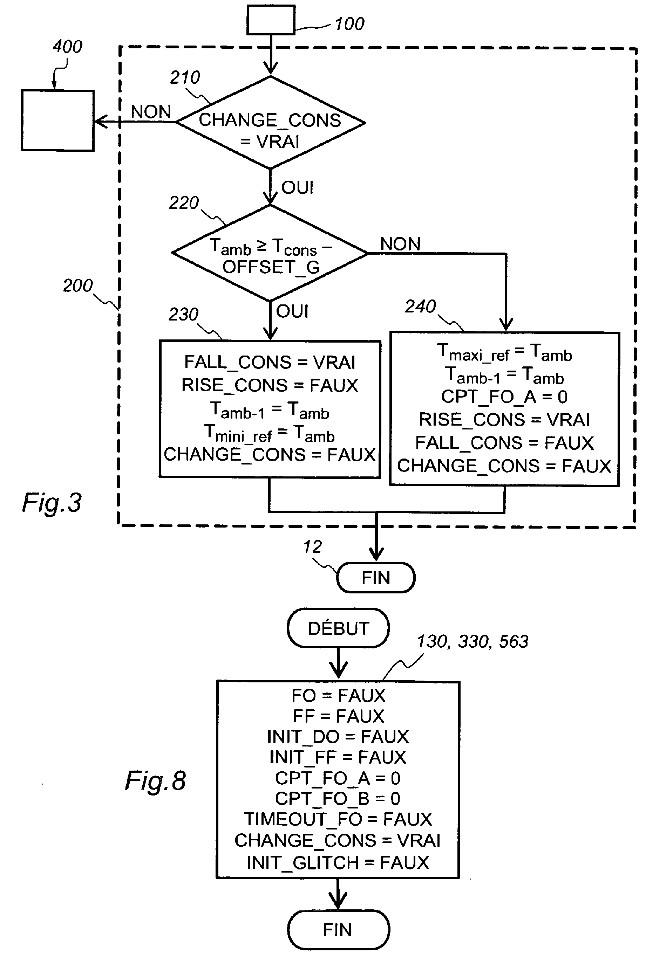

Tout d'abord, il est vérifié si le mode de fonctionnement de l'appareil de chauffage MODE est différent d'un mode dit « hors gel » HG. Le mode hors gel HG est un mode de l'appareil de chauffage dans lequel celui-ci est commandé avec une consigne de température faible, classiquement de l'ordre de quelques degrés, par exemple 7 °C. Ce mode hors gel est généralement mis en oeuvre en cas d'absence prolongée d'utilisateurs de l'appareil de chauffage électrique. Dans le cas où le mode de fonctionnement de l'appareil de chauffage MODE est égal au mode hors gel HG, on estime qu'il n'est pas nécessaire de procéder à la détermination de l'ouverture d'un ouvrant. Dans ce cas, quoi qu'il arrive, l'appareil de chauffage continue de chauffer à la température correspondant au mode hors gel HG. Dans ce cas, l'algorithme se poursuit par une étape de réinitialisation 130 qui sera décrite plus en détails par la suite, en regard de la figure 8.

Il est également vérifié à la deuxième étape de test 120 si le mode de fonctionnement de l'appareil de chauffage MODE est différent d'un mode ARRÊT, dans lequel l'appareil de chauffage est simplement coupé. Dans ce cas, il est inutile de vérifier l'ouverture d'un ouvert. Aucun gain énergétique ne peut être réalisé.

Il est encore vérifié que le fil pilote commande un mode de fonctionnement de l'appareil de chauffage FP différent du mode hors gel HG.

Le fil pilote est une consigne centralisée de plusieurs appareils de chauffage, qui prédomine par rapport à la commande de chaque appareil de chauffage. La consigne du fil pilote est généralement programmée sur un programmateur centralisé. Cette consigne commande les différents appareils de chauffage de manière coordonnée.

Il est enfin vérifié à cette deuxième étape de test 120 que la consigne du fil pilote FP est différente du mode ARRÊT.

Dans le cas où au moins un des critères suivants :

$$MODE \neq HG \tag{C1}$$

$$MODE \neq ARRÊT \tag{C2}$$

$$FP \neq HG \tag{C3}$$

$$FP \neq ARRÊT \tag{C4}$$

n'est pas vérifié, alors l'algorithme de tests basiques se poursuit par le bloc 130 de réinitialisation. Cette réinitialisation sera décrite plus en détails ci-après, en regard de la figure 8. Dans ce cas, l'algorithme 1 de détection d'ouverture et de fermeture d'un ouvrant ne détermine pas si une ouverture d'un ouvrant est intervenue.

Dans le cas contraire, où les quatre critères C1, C2, C3 et C4 sont vérifiés, alors l'algorithme de tests basiques se termine et l'algorithme 1 de détection d'ouverture et de fermeture d'un ouvrant se poursuit par le bloc de décision 200, illustré plus en détails à la figure 3.

Dans ce bloc de décision 200, il est tout d'abord déterminé, à une étape 210 de test, si un bit CHANGE_CONS indiquant un changement de consigne a une valeur égale à VRAI :

$$CHANGE\_CONS = VRAI \tag{C5}$$

La consigne est la commande de l'élément chauffant de l'appareil de chauffage électrique. La consigne, ou la modification de la consigne, peut donc être définie en fonction de nombreux paramètres connus de l'homme de l'art, notamment en fonction d'une requête d'un utilisateur, d'une loi de programmation ou d'une détection de présence/d'absence d'un utilisateur, ou encore d'une combinaison de ces éléments.

Si ce bit CHANGE_CONS a une valeur égale à VRAI, alors on compare la température ambiante $T_{amb}$ à la température de consigne $T_{cons}$, en l'espèce minorée d'une valeur de décalage OFFSET_G qui permet d'intégrer un décalage potentiel entre la température de consigne et la valeur de température ambiante instantanée $T_{amb}$ effectivement mesurée par la sonde de mesure.

On détermine ainsi, à l'étape 220 si le critère suivant est vérifié :

$$T_{amb} \geq T_{cons} - OFFSET\_G. \qquad (C6)$$

Si le critère C6 est vérifié à l'étape 220, alors il est estimé qu'une baisse de la température de consigne de l'appareil de chauffage est intervenue. L'algorithme de décision 200 se poursuit alors à l'étape 230 où les valeurs des variables suivantes sont définies :

- la valeur d'un bit FALL_CONS indiquant une diminution de la consigne de l'appareil de chauffage est définie à une valeur égale à VRAI ;
- la valeur d'un bit RISE_CONS indiquant une augmentation de la consigne de l'appareil de chauffage est définie à une valeur égale à FAUX;
- la valeur d'une variable $T_{amb-1}$ représentative de la température mesurée lors d'une exécution précédente de l'algorithme 1 de la figure 1 est définie comme étant égale à la température ambiante $T_{amb}$ ;
- la valeur d'une variable $T_{mini\_ref}$ représentative d'une température minimale mesurée après la modification de la consigne est définie comme étant égale à la température ambiante $T_{amb}$ ;
- la valeur du bit CHANGE_CONS représentatif d'un changement de consigne est enfin définie comme étant égale à FAUX.

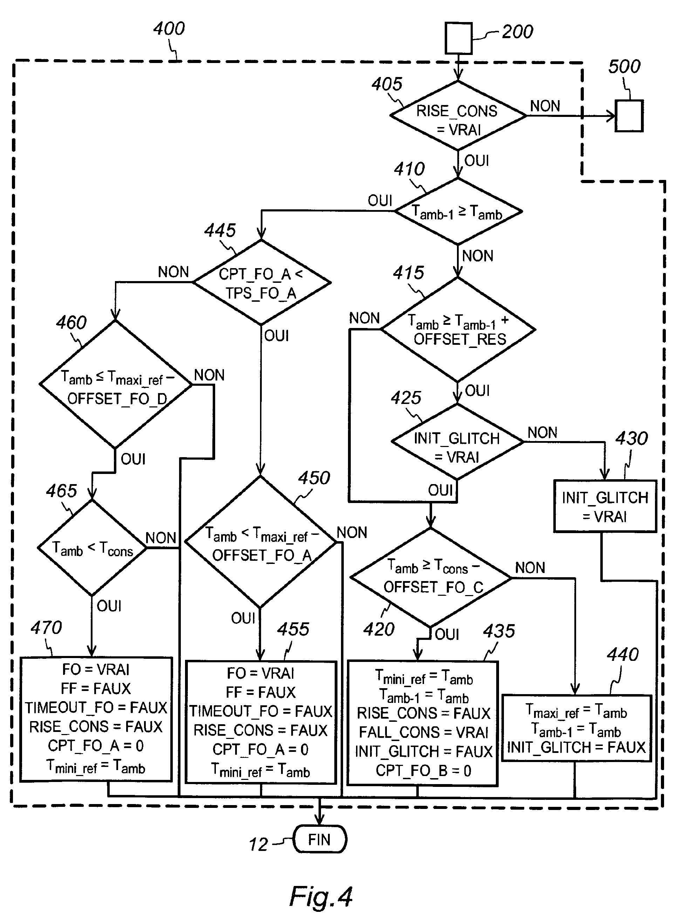

Après ces définitions des valeurs de ces variables, l'algorithme prend fin, puis recommence à l'étape 10 de début. Du fait notamment du changement de la valeur du bit CHANG_CONS à la valeur FAUX, lors de cette nouvelle exécution de l'algorithme 200, le critère C5 n'est plus vérifié à l'étape 210. Par suite, lors de cette nouvelle exécution de l'algorithme 200, en sortie du bloc 210, l'algorithme 200 se poursuit au niveau du bloc 400. Ce bloc sera décrit plus en détails ci-après en regard de la figure 4.

Dans le cas où le critère C6 n'est pas vérifié à l'étape 220, alors il est estimé que la température ambiante est inférieure à la température de consigne. Ce cas de figure correspond à une augmentation de la température de consigne de l'appareil de chauffage. L'algorithme de décision se poursuit alors à l'étape 240 où les valeurs des variables suivantes sont définies :

- la valeur du bit FALL_CONS indiquant une diminution de la consigne de l'appareil de chauffage est définie à une valeur égale à FAUX ;
- la valeur du bit RISE_CONS indiquant une augmentation de la consigne de l'appareil de chauffage est définie à une valeur égale à VRAI ;
- la valeur d'une variable $T_{amb-1}$ représentative de la température mesurée lors d'une exécution précédente de l'algorithme de la figure 1 est définie comme étant égale à la température ambiante $T_{amb}$ ;
- la valeur d'une variable $T_{maxi\_ref}$ représentative d'une température maximale mesurée après la modification de la consigne est définie comme étant égale à la température ambiante $T_{amb}$ ;
- la valeur du bit CHANGE_CONS représentatif d'un changement de consigne est définie comme étant égale à FAUX ;
- enfin la valeur d'un compteur CPT_FO_A est définie comme étant égale à 0.

Après ces définitions des valeurs de ces variables, l'algorithme 1 prend fin. Il est ensuite relancé, automatiquement, à l'étape 10 de début. Du fait du changement de la valeur du bit CHANG_CONS à la valeur FAUX, lors de cette nouvelle exécution de l'algorithme 200, le critère C5 n'est plus vérifié à l'étape 210. Par suite, lors de cette nouvelle exécution de l'algorithme 200, en sortie du bloc 210, l'algorithme 200 se poursuit au niveau du bloc de détection d'ouverture lors d'un accroissement de consigne 400.

Le bloc 400, tel que représenté à la figure 4, représente schématiquement l'algorithme mis en oeuvre, en cas d'accroissement de consigne, pour déterminer une ouverture d'un ouvrant dans la pièce.

La première étape 405 de cet algorithme consiste à déterminer si une augmentation de la consigne est effectivement intervenue. Pour cela, à l'étape 405, on vérifie que le bit indiquant une augmentation de la température RISE_CONS a une valeur égale à VRAI. Autrement dit, on vérifie que le critère suivant est vérifié :

$$RISE\_CONS = VRAI. \qquad (C7)$$

Pour rappel, la valeur de ce bit a été définie à VRAI ou FAUX, selon le cas, au niveau des étapes 230 et 240 de l'algorithme de décision 200 représenté à la figure 3.

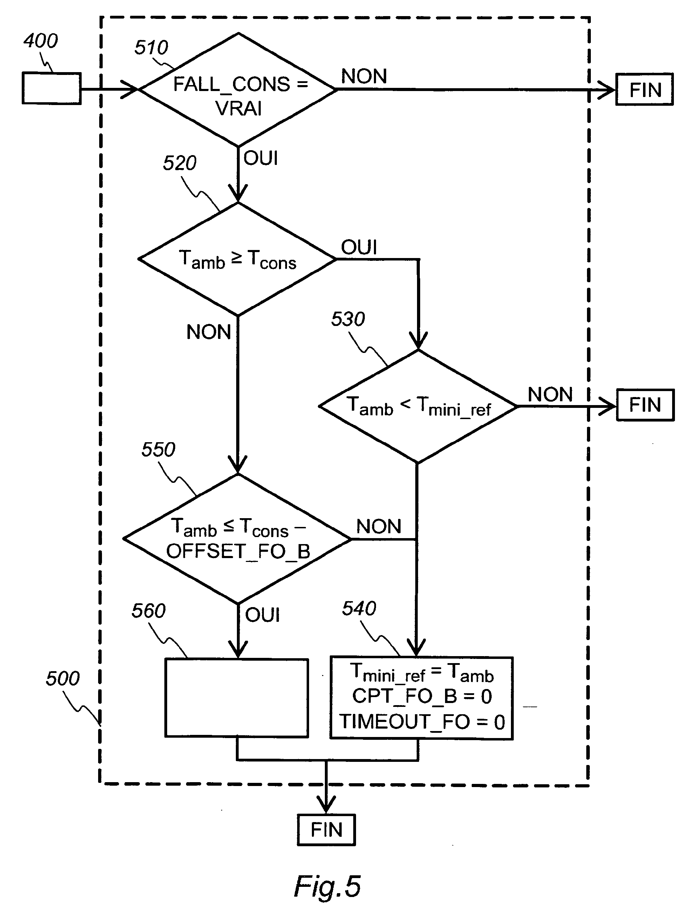

Si le critère C7 n'est pas vérifié à l'étape 405, alors l'algorithme de détection d'ouverture lors d'un accroissement de consigne se termine de suite et l'algorithme de la figure 1 se poursuit au début de l'algorithme 500 de détection d'ouverture lors d'une diminution de la consigne, qui sera décrit plus en détails ci-après en regard de la figure 5.

Si au contraire le critère C7 est vérifié à l'étape 405, c'est-à-dire qu'une augmentation de la consigne est intervenue, l'algorithme de la figure 4 se poursuit par l'étape 410 où la température ambiante instantanée $T_{amb}$ est comparée avec la température ambiante $T_{amb-1}$ mesurée lors de la précédente exécution de l'algorithme 1 de détection d'ouverture et de fermeture d'un ouvrant. En d'autres termes, à l'étape 410, on détermine si le critère suivant est vérifié :

$$T_{amb-1} \geq T_{amb} \qquad (C8)$$

Ce critère permet de déterminer l'évolution de la température ambiante entre deux exécutions consécutives de l'algorithme 1 de la figure 1.

Par température ambiante instantanée, on entend la température ambiante mesurée au cours de l'exécution de l'algorithme 1 de détection d'ouverture et de fermeture d'un ouvrant. Cette température ambiante instantanée peut ainsi être moyennée sur un intervalle de temps de mesure.

La température ambiante instantanée est liée à une exécution de l'algorithme 1 de détection d'ouverture et de fermeture d'un ouvrant. Elle se distingue de la température ambiante mesurée au cours d'une exécution précédente de l'algorithme 1 de détection d'ouverture et de fermeture d'un ouvrant.

Si le critère C8 n'est pas vérifié à l'étape 410, alors l'algorithme de détermination d'ouverture en cas d'accroissement de consigne se poursuit à l'étape 415. A cette étape 415, on vérifie si le critère suivant est vérifié :

$$T_{amb} \geq T_{amb-1} + OFFSET\_RES \qquad (C9)$$

où OFFSET_RES est une constante, par exemple égale à 0,5 °C. Le critère C9 vise ainsi à déterminer si l'augmentation mesurée de la température ambiante n'est pas, en fait, due à un défaut de résolution du capteur de température de l'appareil de chauffage électrique.

Dans le cas où le critère C9 est vérifié à l'étape 415, l'algorithme se poursuit par l'étape 425 où il est déterminé si le critère suivant est vérifié :

$$INIT\_GLITCH = VRAI \qquad (C10)$$

où INIT_GLITCH est un bit destiné à indiquer qu'une impulsion transitoire s'est produite.

En fait, initialement, le bit INIT_GLITCH est défini comme étant égale à FAUX. Par conséquent, lors du premier passage par l'étape 415, le critère C10 n'est pas vérifié. L'algorithme se poursuit alors par l'étape 430 où la valeur du bit INIT_GLITCH est définie égale à VRAI. L'algorithme se termine alors à l'étape FIN.

Par suite, lors d'une exécution ultérieure de l'algorithme 1 de la figure 1, si l'algorithme revient à l'étape 425, le critère C10 sera alors vérifié.

Si le critère C10 est vérifié à l'étape 415 alors on passe à l'étape 420, comme dans le cas où le critère C9 n'est pas vérifié. Ainsi, la combinaison des étapes 425, 430 permet de filtrer les cas où le critère C9 est vérifié à l'étape 415, de manière trompeuse, du fait de l'apparition d'une impulsion transitoire parasite.

A l'étape 420, il est déterminé si le critère suivant est vérifié :

$$T_{amb} \geq T_{cons} - OFFSET\_FO\_C \qquad (C11)$$

où OFFSET_FO_C est une constante représentant une dérive par rapport à la valeur de consigne et qui peut, par exemple, être égale à 0,5 °C.

Ainsi le critère C11 permet de vérifier si la différence entre la température ambiante instantanée mesurée $T_{amb}$ et la température de consigne $T_{cons}$ peut s'expliquer du fait d'une dérive - ou écart - entre la température ambiante instantanée mesurée et la température de consigne.

Dans le cas où le critère C11 est vérifié à l'étape 420, alors l'algorithme se poursuit à l'étape 435 où les valeurs des variables suivantes sont définies :

- la valeur de la variable $T_{mini\_ref}$, représentative de la température minimale de référence mesurée après l'apparition de la modification de la consigne, est définie comme étant égale à la température ambiante $T_{amb}$ ;
- la valeur de la variable $T_{amb-1}$ est définie comme étant égale à la valeur de la température ambiante instantanée mesurée $T_{amb}$ ;

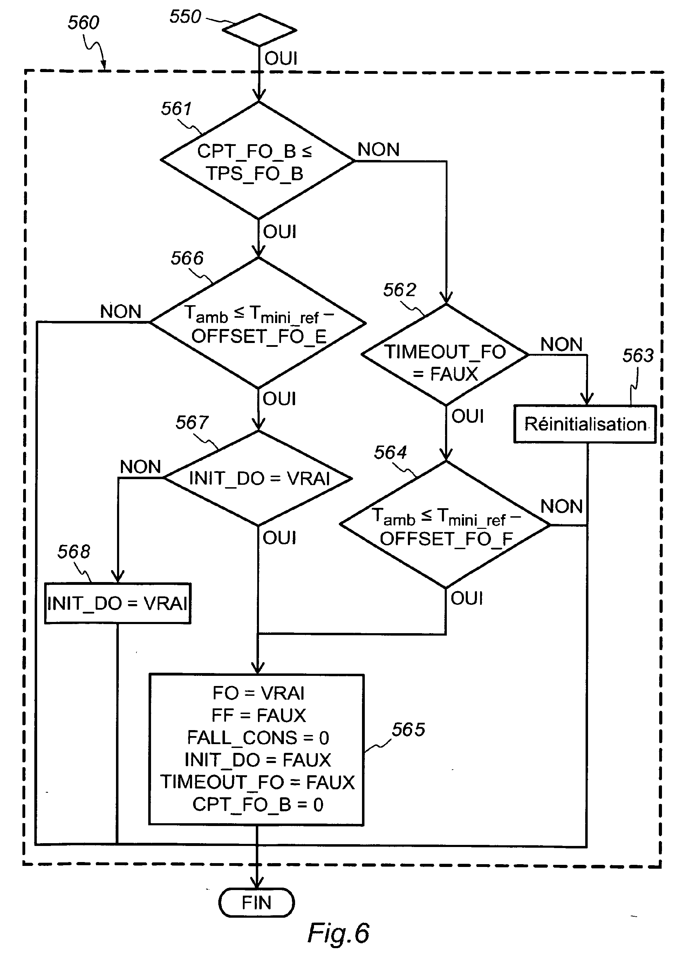

- la valeur du bit RISE_CONS indicateur d'une augmentation de la consigne est définie comme étant égale à FAUX ;
- la valeur du bit FALL_CONS indicateur d'une diminution de la consigne est définie comme étant égale à VRAI ;
- la valeur du bit INIT_GLITCH indicateur de l'apparition d'une impulsion transitoire parasite est définie comme étant égale à FAUX ;
- enfin la valeur d'une variable CPT_FO_B, mise en oeuvre dans l'algorithme de la figure 6, est définie comme étant égale à 0.

Dans le cas où le critère C11 n'est pas vérifié à l'étape 420, alors l'algorithme se poursuit à l'étape 440 où les valeurs des variables suivantes sont définies :

- la valeur de la variable $T_{maxi\_ref}$, représentative de la température maximale de référence mesurée après la modification de la consigne, est définie comme étant égale à la température ambiante $T_{amb}$ ;
- la valeur de la variable $T_{amb-1}$ est définie comme étant égale à la valeur de la température ambiante instantanée mesurée $T_{amb}$ ; et
- la valeur du bit INIT_GLITCH indicateur de l'apparition d'une impulsion transitoire parasite est définie comme étant égale à FAUX.

On revient maintenant au bloc 410. Dans le cas où le critère C8 est vérifié au niveau de ce bloc 410, c'est-à-dire que la température ambiante a baissé malgré une augmentation de la consigne, l'algorithme se poursuit à l'étape 445.
A cette étape 445, on détermine si le critère suivant est vérifié :

$$CPT\_FO\_A < TPS\_FO\_A \qquad (C12)$$

où CPT_FO_A est un compteur dont la valeur a été définie comme étant égale à 0 à l'étape 240, et où TPS_FO_A est une constante, par exemple égale à 900 s, représentant le temps durant lequel on test que le critère de l'étape 450, qui sera décrit plus ultérieurement.
En d'autres termes, tant que le critère de l'étape 450 n'a pas été vérifié durant un temps TPS_FO_A, la sortie du bloc 445 ramène l'algorithme à l'étape 450.
A cette étape 450, il est déterminé si le critère suivant est vérifié :

$$T_{amb} < T_{maxi\_ref} - OFFSET\_FO\_A \qquad (C13)$$

où OFFSET_FO_A est une constante, par exemple égale à 1,5 °C. Le critère C13, à l'étape 450, vérifie ainsi si la température ambiante est inférieure à la température maximale de référence $T_{maxi\_ref}$ minorée d'une valeur constante.
Si ce critère n'est pas vérifié, alors l'algorithme se termine à l'étape FIN.
Si, au contraire, ce critère C13 est vérifié à l'étape 450, alors, à l'étape 455, les valeurs des variables suivantes sont définies :

- la valeur du bit FO indicateur de l'ouverture d'un ouvrant est définie comme étant égale à VRAI, c'est-à-dire que l'ouverture d'un ouvrant est détectée ;
- la valeur du bit FF indicateur de la fermeture de l'ouvrant est définie comme étant égale à FAUX ;
- la valeur du compteur TIMEOUT_FO est définie comme étant égale à 0 (ou FAUX) ;
- la valeur du bit RISE_CONS indicateur d'une augmentation de la consigne est définie comme étant égale à FAUX ;
- la valeur du compteur CPT_FO_A est définie comme égale à 0 ; et
- la valeur de la température $T_{mini\_ref}$ est définie comme étant égale à la température ambiante.

Enfin, l'algorithme 1 se termine à l'étape FIN.
Si, maintenant, le critère de l'étape 445 n'est pas vérifié, c'est-à-dire si CPT_FO_A $\geq$ TPS_FO_A, alors l'algorithme 400 se poursuit à l'étape 460.
A cette étape 460, le critère suivant est vérifié :

$$T_{amb} \leq T_{maxi\_ref} - OFFSET\_FO\_D \qquad (C14)$$

où OFFSET_FO_D est une constante, par exemple égale à 0,5 °C, de décalage de température qui permet une détection d'ouverture d'ouvrant quand deux mesures de la température ambiante réalisées au cours d'exécutions successives de l'algorithme de la figure 1 sont égales et que les critères C 14 et C 15 sont vérifiés.

Si le critère C14 n'est pas vérifié à l'étape 460, alors l'algorithme 1 se termine.

Au contraire, si le critère C14 est vérifié à l'étape 460, alors l'algorithme se poursuit à l'étape 465 où il est déterminé si le critère suivant est vérifié :

$$T_{amb} < T_{cons}. \qquad (C15)$$

Si le critère C15 n'est pas vérifié à l'étape 465, alors l'algorithme se termine.

Au contraire, si le critère C15 est vérifié à l'étape 465, alors il est déterminé qu'un ouvrant est ouvert. Dans ce cas, l'algorithme se poursuit à l'étape 470 où les valeurs des variables suivantes sont définies :

- la valeur du bit FO indiquant une fenêtre ouverte est définie comme étant égale à VRAI ;
- la valeur du bit FF indiquant une fenêtre fermée est définie comme étant égale à FAUX ;
- une temporisation TIMEOUT_FO est initialisé à 0 ;
- la valeur du bit RISE_CONS indiquant une augmentation de consigne est définie comme étant égale à FAUX ;
- la valeur de la variable $T_{mini\ ref}$ est définie comme étant égale à la température ambiante $T_{amb}$ ; et
- la valeur du compteur CPT_FO_A est définie comme étant égale à 0. L'algorithme 1 se termine alors.

On va maintenant écrire plus en détails l'algorithme 500, illustré à la figure 5, de détermination de l'ouverture d'un ouvrant en cas de diminution de la consigne.

L'entrée de cet algorithme correspond au cas où le critère C7 du bloc 405 n'est pas vérifié, c'est-à-dire que le bit RISE_CONS indicateur d'une augmentation de consigne a une valeur égale à FAUX.

Dans ce cas, il est tout d'abord déterminé, à l'étape 510, si le critère suivant est vérifié :

$$FALL\_CONS = VRAI \qquad (C16)$$

c'est-à-dire qu'on détermine si le bit FALL_CONS indicateur d'une baisse de consigne a une valeur égale à VRAI.

Si ce critère n'est pas vérifié, alors l'algorithme se termine.

Si ce critère est vérifié, c'est-à-dire qu'une diminution de la consigne est intervenue, l'algorithme se poursuit alors à l'étape 520 où il est vérifié si la température ambiante $T_{amb}$ est supérieure ou égale à la température de consigne $T_{cons}$ :

$$T_{amb} \geq T_{cons}. \qquad (C17)$$

Si ce critère est vérifié, alors l'algorithme se poursuit à l'étape 530 où il est vérifié si la température ambiante $T_{amb}$ est strictement inférieure à la température minimum de référence $T_{mini\_ref}$.

Si tel n'est pas le cas, l'algorithme se termine.

Si, au contraire, la température ambiante $T_{amb}$ est effectivement strictement inférieure à la température minimum de référence $T_{min\_ref}$, alors l'algorithme se poursuit par l'étape 540 où les valeurs des variables suivantes sont définies :

- la valeur de la température minimum de référence $T_{mini\_ref}$ est définie comme étant égale à la température ambiante ;
- le compteur CPT_FO_B est initialisé à la valeur 0 ; et
- la temporisation TIMEOUT_FO est initialisée comme étant égale à 0.

On revient maintenant au bloc 520. Au niveau de ce bloc, si la température ambiante $T_{amb}$ est strictement inférieure à la température de consigne $T_{cons}$ alors l'algorithme se poursuit à l'étape 550 où il est déterminé si le critère suivant est vérifié :

$$T_{amb} \leq T_{cons} - OFFSET\_FO\_B \qquad (C18)$$

où la constante OFFSET_FO_B, qui peut par exemple être égale à 0,5 °C, est l'écart maximal toléré de la température ambiante avec la température de consigne, lorsque, en réponse à une diminution de la température de consigne, la température ambiante diminue. En effet, suite à la diminution de la température de consigne, l'appareil de chauffage arrête de chauffer. Par suite, la température ambiante diminue jusqu'à atteindre une valeur inférieure à la nouvelle température de consigne. Cette diminution de la température ambiante est fonction de l'inertie de l'élément chauffant de l'appareil de chauffage.

Lorsque la température ambiante atteint la valeur de la température de consigne, alors l'appareil de chauffage doit chauffer de nouveau. La constante OFFSET_FO_B représente ainsi la limite sous laquelle ne devrait pas descendre la température ambiante avant que l'appareil de chauffage ne se remette à chauffer. Il convient de distinguer ce régime temporaire où la température ambiante est légèrement inférieure à la température de consigne avec une ouverture d'un ouvrant dans la pièce.

En d'autres termes, du fait de l'inertie de l'appareil de chauffage, il convient de ne pas déterminer toute baisse de la température ambiante sous la température de consigne comme étant une ouverture de l'ouvrant. L'inertie de l'appareil de chauffage peut expliquer que la valeur de la température ambiante instantanée mesurée soit inférieure à la température de consigne.

Si le critère C18 n'est pas vérifié à l'étape 550, l'algorithme se poursuit à l'étape 540 précédemment décrite puis se termine.

Si, au contraire, le critère C18 est vérifié à l'étape 550, alors l'algorithme se poursuit au bloc 560 où l'algorithme de détection d'ouverture d'un ouvrant par pente, illustré à la figure 6, est mis en oeuvre.

Selon cet algorithme de la figure 6, dans un premier temps, il est déterminé, à l'étape 561, si le critère suivant est vérifié :

$$\text{CPT\_FO\_B} \leq \text{TPS\_FO\_B} \qquad (C19)$$

où CPT_FO_B est un compteur alors que TPS_FO_B est une constante de temps, par exemple égale à 15 min, durant lequel on teste si

$$T_{amb} \leq T_{mini\_ref} - \text{OFFSET\_FO\_E.} \qquad (C20)$$

Si le critère C19 n'est pas vérifié à l'étape 561, alors l'algorithme se poursuit par le bloc 562 où il est déterminé si le critère suivant est vérifié:

$$\text{TIMEOUT\_FO} = \text{FAUX} \qquad (C21)$$

où TIMEOUT_FO est un compteur, de par exemple 2H ou 16 bits, au delà duquel la réinitialisation de l'algorithme est effectuée. En d'autres termes, si le compteur TIMEOUT_FO a une valeur égale à VRAI, alors la réinitialisation est commandée, à l'étape 563.

Si, par contre, le compteur TIMEOUT_FO a une valeur égale à FAUX à l'étape 562, alors l'algorithme se poursuit à l'étape 564.

A cette étape 564, il est déterminé si le critère suivant est vérifié :

$$T_{amb} \leq T_{mini\_ref} - \text{OFFSET\_FO\_F} \qquad (C22)$$

où la constante OFFSET_FO_F, par exemple égale à 1,5 °C, correspond à un décalage de température par rapport à la température minimale de référence pour détecter une ouverture d'un ouvrant dans un délai compris entre TPS_FO_B et TIMEOUT_FO.

En d'autres termes, si la température ambiante mesurée $T_{amb}$ est inférieure ou égale à la température minimale de référence $T_{min\_ref}$ moins le décalage OFFSET_FO_F, alors une ouverture de l'ouvrant est déterminée à l'étape 565.

A cette étape 565, les valeurs des variables suivantes sont définies :

- la valeur du bit FO indiquant une fenêtre ouverte est définie comme étant égale à VRAI ;
- la valeur du bit FF indiquant une fenêtre fermée est définie comme étant égale à FAUX ;
- la valeur d'un bit INIT_DO est définie comme étant égale à FAUX ;
- la valeur du bit TIME_OUT_FO est définie égale à FAUX ;

- la valeur du compteur CPT_FO_B est définie comme étant égale à 0.

Dans le cas contraire, où le critère C22 n'est pas vérifié à l'étape 564, alors l'algorithme se termine par l'étape FIN.

Nous revenons maintenant au bloc 561 où il est déterminé si le critère suivant est vérifié :

$$CPT\_FO\_B \leq TPS\_FO\_B \qquad (C19)$$

Si le critère C19 est vérifié à l'étape 561, alors l'algorithme de détection par pente se poursuit à l'étape 566.

A cette étape 566, il est déterminé si le critère suivant est vérifié :

$$T_{amb} \leq T_{mini\_ref} - OFFSET\_FO\_E \qquad (C23)$$

où OFFSET_FO_E est une constante, par exemple égale à 0,75 °C.

En d'autres termes, pour que le critère C23 soit vérifié, il faut que la température ambiante est baissée d'une valeur au moins égale à la constante OFFSET_FO_E en un temps inférieur à la constante TPS_FO_B.

Si le critère C23 n'est pas vérifié à l'étape 566, alors l'algorithme 560 se termine à l'étape FIN.

Dans le cas contraire, où le critère C23 est vérifié à l'étape 566, alors l'algorithme 560 se poursuit à l'étape 567 où il est déterminé si le critère suivant est vérifié :

$$INIT\_DO = VRAI. \qquad (C24)$$

Si le critère C24 n'est pas vérifié à l'étape 567, alors l'algorithme 560 se poursuit à l'étape 568 où la valeur du bit INIT_DO est définie comme étant égale à VRAI, puis l'algorithme se termine à l'étape FIN. L'étape 567 implique que les conditions pour que les critères C19 et C23 soient remplis doivent être réunies au cours de deux exécutions différentes de l'algorithme 560 ou que les critères C21 et C22 soient vérifiés et que le critère C19 ne soit pas vérifié pour que cet algorithme 560 aboutisse à l'étape 565.

Si, au contraire, le critère C24 est vérifié à l'étape 567, alors l'algorithme 560 se poursuit à l'étape 565, décrite précédemment, puis se termine à l'étape FIN.

Nous allons maintenant décrire l'algorithme 300 de reconnaissance de fermeture de l'ouvrant, représenté sur la figure 7.

Dans un premier temps, à l'étape 305, il est déterminé si le critère suivant est vérifié :

$$T_{amb} < T_{mini\_ref}. \qquad (C25)$$

Si ce critère est vérifié, alors l'algorithme 300 de détection de la fermeture d'un ouvrant se poursuit à l'étape 310 où la valeur de la variable $T_{mini\_ref}$, représentative de la température ambiante minimale mesurée depuis la détection d'ouverture d'un ouvrant, est définie comme étant égale à la température ambiante instantanée $T_{amb}$. L'algorithme 300 de détection de la fermeture d'un ouvrant se termine alors à l'étape FIN.

Si, au contraire, le critère C25 n'est pas vérifié à l'étape 305, alors l'algorithme se poursuit à l'étape 315 où il est déterminé si le critère suivant est vérifié :

$$T_{amb} \geq T_{mini\_ref} + OFFSET\_FF\_A \qquad (C26)$$

où OFFSET_FF_A est une constante, par exemple égale à 0,5 °C.

Si le critère C26 n'est pas vérifié à l'étape 315, alors l'algorithme 300 de détection de fermeture de l'ouvrant se poursuit à l'étape 320 où :

- la valeur d'une variable INIT_FF est définie comme étant égale à FAUX ; et
- la valeur d'une variable CPT_FF_A est définie comme étant égale à 0.

L'algorithme 300 de détection de fermeture de l'ouvrant se poursuit alors à l'étape 325 où il est déterminé si le critère suivant est vérifié :

$$TIMEOUT\_FO = FAUX \qquad (C27)$$

Si le critère C27 est vérifié à l'étape 325, alors l'algorithme 300 de détection de fermeture de l'ouvrant se termine à l'étape FIN.

Si, au contraire, le critère C27 n'est pas vérifié à l'étape C27, alors l'algorithme 300 de détection de fermeture de l'ouvrant se poursuit à l'étape 330 où il est procédé à la réinitialisation de la fonction aération. Cette réinitialisation sera décrite plus en détails ci-après en regard de la figure 8. L'algorithme 300 de détection de fermeture se termine alors à l'étape FIN.

Si, maintenant, le critère C26 est vérifié à l'étape 315, alors l'algorithme 300 de détection de fermeture de l'ouvrant se poursuit à l'étape 335 où il est déterminé si le critère suivant est vérifié :

$$INIT\_FF = TRUE \qquad (C28)$$

où INIT_FF est un bit permettant d'indiquer que l'étape 335 est réalisée pour la première fois depuis la détection d'ouverture d'un ouvrant.

Si le critère C28 n'est pas vérifié à l'étape 335, alors l'algorithme 300 de détection de la fermeture de l'ouvrant se poursuit à l'étape 340 où:

- la valeur du bit INIT_FF est définie comme étant égale à VRAI ; et
- la valeur d'un compteur GPT_FF_A est définie comme étant égale à 0.

L'algorithme 300 de détection de la fermeture d'un ouvrant se termine alors à l'étape FIN.

Si, maintenant, le critère C28 est vérifié à l'étape 335, cela signifie que cette étape est exécutée pour la deuxième fois depuis la détection d'ouverture d'un ouvrant. Dans ce cas, l'algorithme 300 de détection de la fermeture d'un ouvrant se poursuit à l'étape 345 où il est déterminé si le critère suivant est vérifié :

$$CPT\_FF\_A > TPS\_FF\_A \qquad (C29)$$

où CPT_FF_A est un compteur, par exemple 16 bits, servant à l'application de la condition de détection de fermeture de l'ouvrant et où TPS_FF_A est un temps durant lequel la température ambiante doit respectée la condition de détection de fermeture pour acter d'une détection d'une fermeture de l'ouvrant. Ce temps TPS_FF_A peut par exemple être égal à 240 s.

Si le critère C29 n'est pas vérifié à l'étape 345, alors l'algorithme 300 de détection de la fermeture de l'ouvrant se termine à l'étape FIN.

Dans le cas contraire, où le critère C29 est vérifié à l'étape 345, alors il est déterminé que l'ouvrant a été fermé et l'algorithme 300 de détection de la fermeture d'un ouvrant se poursuit à l'étape 350 où :

- la valeur du bit FO est définie comme étant égale à FAUX ;
- la valeur du bit FF est définie comme étant égale à VRAI ;
- la valeur du bit INIT_FF est définie comme étant égale à FAUX ;
- le compteur CPT_FF_A est défini comme étant égal à 0 ; et
- la valeur du bit CHANGE_CONS est définie comme étant égale à VRAI. L'algorithme se termine alors à l'étape FIN.

Nous allons maintenant décrire plus en détails la fonction de réinitialisation en regard de la figure 8.

La fonction de réinitialisation consiste en unique étape 130, 330, 563 où les valeurs des variables suivantes sont définies :

- la valeur du bit FO est définie comme étant égale à FAUX ;
- la valeur du bit FF est définie comme étant égale à FAUX ;
- le compteur CPT_FO_A est défini comme étant égal à 0 ;
- le compteur CPT_FO_B est défini comme étant égal à 0 ;
- la valeur du bit TIMEOUT_FO est définie comme étant égale à FAUX ;
- la valeur du bit CHANGE_CONS est définie comme étant égale à VRAI ;
- la valeur du bit INIT_GLITCH est définie comme étant égale à FAUX. Ces valeurs sont les valeurs par défaut de ces variables.

L'algorithme 1 de détection d'ouverture et de fermeture d'un ouvrant peut être mis en oeuvre dans le cadre d'un procédé pour réguler la consommation énergétique de l'appareil de chauffage. En effet, la consommation énergétique de l'appareil de chauffage peut être réduite dans le cas où il est déterminé, au moyen de l'algorithme 1 de détection d'ouverture et de fermeture d'un ouvrant, qu'un ouvrant est ouvert, de sorte que l'appareil de chauffage ne pourra pas faire en sorte que la température ambiante atteigne la température de consigne. On réalise ainsi des économies énergétiques importantes.

De manière analogue, la température de consigne peut être augmentée lorsque l'algorithme 1 de détection d'ouverture et de fermeture d'un ouvrant détermine que l'ouvrant a été fermé. Ceci permet d'assurer un meilleur confort de l'utilisateur.

Bien entendu, la présente invention n'est pas limitée à l'exemple de mode de réalisation décrit et représenté, mais elle est susceptible de nombreuses variantes accessibles à l'homme de l'art.

## Revendications

1. Procédé de détermination de l'état d'ouverture d'un ouvrant dans une pièce dans laquelle est installé un dispositif de régulation thermique, comprenant les étapes suivantes consistant à :

   - modifier une température de consigne ($T_{cons}$) du dispositif de régulation thermique ;
   - déterminer une variation de ladite température de consigne ($T_{cons}$) ;
   - exécuter un premier algorithme (400) de détection de l'état ouvert d'un ouvrant si la température de consigne ($T_{cons}$) a augmenté à l'étape de modification, le premier algorithme (400) mettant en oeuvre au moins un premier critère, de détermination de l'état ouvert d'un ouvrant en cas d'augmentation de la température de consigne ($T_{cons}$) ; ou
   - exécuter un deuxième algorithme (500) de détection de l'état ouvert d'un ouvrant si la température de consigne ($T_{cons}$) a diminué à l'étape de modification, le deuxième algorithme (500) mettant en oeuvre au moins un deuxième critère, de détermination de l'état ouvert d'un ouvrant en cas de diminution de la température de consigne ($T_{cons}$), le deuxième critère étant distinct du premier critère.

2. Procédé selon la revendication 1, dans lequel le premier algorithme détermine l'état ouvert d'un ouvrant dans le cas où :

   - une température ambiante ($T_{amb}$) baisse suite à l'augmentation de la température de consigne ($T_{cons}$) ; et
   - la température ambiante ($T_{amb}$) est inférieure à la température de consigne ($T_{cons}$).

3. Procédé selon la revendication 2, dans lequel le premier algorithme détermine l'état ouvert d'un ouvrant dans le cas où la température ambiante ($T_{amb}$) est inférieure à une température ambiante maximale de référence ($T_{maxi\_ref}$) mesurée après l'augmentation de la température de consigne ($T_{cons}$), minorée d'une première constante (OFFSET_FO_D).

4. Procédé selon la revendication 2 ou 3, dans lequel le premier algorithme détermine l'état ouvert d'un ouvrant dans le cas où, la température ambiante ($T_{amb}$) est inférieure à une température ambiante maximale de référence ($T_{maxi\_ref}$) mesurée après l'augmentation de la température de consigne ($T_{cons}$), minorée d'une deuxième constante (OFFSET_FO_A), durant un intervalle de temps prédéterminé (TPS_FO_A).

5. Procédé selon l'une quelconque des revendications précédentes, dans lequel le deuxième algorithme détermine l'état ouvert de l'ouvrant dans le cas où :

   - la température ambiante ($T_{amb}$) est inférieure ou égale à la température de consigne ($T_{cons}$) minorée d'une troisième constante (OFFSET_FO_B) ; et
   - la température ambiante ($T_{amb}$) est inférieure à une température ambiante minimale ($T_{mini\_ref}$) mesurée après la diminution de la température de consigne ($T_{cons}$), minorée d'une quatrième constante (OFFSET_FO_E), durant un intervalle de temps prédéterminé (TPS_FO_B).

6. Procédé selon l'une quelconque des revendications précédentes, dans lequel le deuxième algorithme détermine l'état ouvert de l'ouvrant dans le cas où :

- la température ambiante est inférieure à la température de consigne ($T_{cons}$) minorée d'une troisième constante (OFFSET_FO_B) ; et
- la température ambiante est inférieure à une température ambiante minimale de référence ($T_{mini\_ref}$) mesurée après la diminution de la température de consigne (Tcons), minorée d'une cinquième constante (OFFSET_FO_F).

**7.** Procédé selon l'une quelconque des revendications précédentes, exécutant en outre un troisième algorithme (300) de détermination de l'état fermé d'un ouvrant dans une pièce dans laquelle est installé un dispositif de régulation thermique.

**8.** Procédé selon la revendication 7, dans lequel le troisième algorithme (300) détermine l'état fermé de l'ouvrant dans le cas où la température ambiante ($T_{amb}$) est supérieure ou égale à une température ambiante minimale de référence ($T_{mini\_ref}$) mesurée après une détermination l'état ouvert de l'ouvrant, majorée d'une constante (OFFSET_FF_A), durant un intervalle de temps prédéterminé (TPS_FF_A).

**9.** Procédé selon l'une quelconque des revendications précédentes, dans lequel la modification de la consigne est définie :

- par un utilisateur ;
- par un fil pilote ;
- par une loi de programmation ;
- en fonction de la détection d'un utilisateur au moyen d'un capteur de présence ;
- en fonction d'une combinaison des critères ci-avant.

**10.** Procédé de régulation énergétique d'un dispositif de régulation thermique, dans lequel la température de consigne ($T_{cons}$) du dispositif de régulation est réduite dans le cas où l'état ouvert d'un ouvrant est déterminé au moyen d'un procédé selon l'une quelconque des revendications 1 à 9.

**11.** Dispositif de régulation thermique comprenant au moins un élément chauffant adapté à être commandé par une unité électronique de commande et un capteur de température ambiante, l'unité électronique de commande étant adaptée à réguler la consommation énergétique du dispositif en mettant en oeuvre le procédé selon la revendication 10.

**12.** Dispositif de régulation thermique selon la revendication 11, choisi parmi :

- un appareil de chauffage, notamment un appareil de chauffage électrique ;
- un climatiseur ; et
- une combinaison de ceux-ci.

**Patentansprüche**

**1.** Verfahren zum Bestimmen des Öffnungszustands eines Flügels in einem Raum, in dem eine Vorrichtung zur Regelung der Temperatur installiert ist, umfassend die folgenden Schritte, die bestehen in:

- Ändern einer Solltemperatur ($T_{cons}$) der Vorrichtung zur Regelung der Temperatur,
- Bestimmen einer Schwankung der Solltemperatur ($T_{cons}$),
- Ausführen eines ersten Algorithmus (400) zum Feststellen des Öffnungszustands eines Flügels, wenn die Solltemperatur ($T_{cons}$) im Änderungsschritt angestiegen ist, wobei der erste Algorithmus (400) mindestens ein erstes Kriterium der Bestimmung des Öffnungszustands eines Flügels bei Erhöhung der Solltemperatur ($T_{cons}$) umsetzt, oder
- Ausführen eines zweiten Algorithmus (500) zum Feststellen des Öffnungszustands eines Flügels, wenn die Solltemperatur ($T_{cons}$) im Änderungsschritt gesunken ist, wobei der zweite Algorithmus (500) mindestens ein zweites Kriterium der Bestimmung des Öffnungszustands eines Flügels bei Verringerung der Solltemperatur ($T_{cons}$) umsetzt, wobei sich das zweite Kriterium vom ersten Kriterium unterscheidet.

**2.** Verfahren nach Anspruch 1, wobei der erste Algorithmus den Öffnungszustand eines Flügels in dem Fall bestimmt, wenn:

- eine Umgebungstemperatur ($T_{amb}$) infolge der Erhöhung der Solltemperatur (Tcons) sinkt, und
- die Umgebungstemperatur ($T_{amb}$) unter der Solltemperatur ($T_{cons}$) liegt.

3.  Verfahren nach Anspruch 2, wobei der erste Algorithmus den Öffnungszustand eines Flügels in dem Fall bestimmt, wenn die Umgebungstemperatur ($T_{amb}$) unter einer maximalen Referenz-Umgebungstemperatur ($T_{maxi\_ref}$) liegt, die nach der Erhöhung der Solltemperatur ($T_{cons}$) abzüglich einer ersten Konstante (OFFSET_FO_D) gemessen wird.

4.  Verfahren nach Anspruch 2 oder 3, wobei der erste Algorithmus den Öffnungszustand eines Flügels bestimmt, wenn die Umgebungstemperatur ($T_{amb}$) unter einer maximalen Referenz-Umgebungstemperatur ($T_{maxi\_ref}$) liegt, die nach der Erhöhung der Solltemperatur ($T_{cons}$) abzüglich einer zweiten Konstante (OFFSET_FO_A) während eines vorbestimmten Zeitintervalls (TPS_FO_A) gemessen wird.

5.  Verfahren nach einem der vorangehenden Ansprüche, wobei der zweite Algorithmus den Öffnungszustand des Flügels bestimmt, wenn:

    - die Umgebungstemperatur ($T_{amb}$) kleiner als oder gleich der Solltemperatur ($T_{cons}$) ist, abzüglich einer dritten Konstante (OFFSET_FO_B), und
    - die Umgebungstemperatur ($T_{amb}$) unter einer minimalen Referenz-Umgebungstemperatur ($T_{mini\_ref}$) liegt, die nach der Verringerung der Solltemperatur ($T_{cons}$) abzüglich einer vierten Konstante (OFFSET_FO_E) während eines vorbestimmten Zeitintervalls (TPS_FO_B) gemessen wird.

6.  Verfahren nach einem der vorangehenden Ansprüche, wobei der zweite Algorithmus den Öffnungszustand des Flügels bestimmt, wenn:

    - die Umgebungstemperatur ($T_{amb}$) unter der Solltemperatur ($T_{cons}$) liegt, abzüglich einer dritten Konstante (OFFSET_FO_B), und
    - die Umgebungstemperatur ($T_{amb}$) unter einer minimalen Referenz-Umgebungstemperatur ($T_{mini\_ref}$) liegt, die nach der Verringerung der Solltemperatur ($T_{cons}$) abzüglich einer fünften Konstante (OFFSET_FO_F) gemessen wird.

7.  Verfahren nach einem der vorangehenden Ansprüche, das ferner einen dritten Algorithmus (300) zum Feststellen des Verschlusszustands eines Flügels in einem Raum ausführt, in dem eine Vorrichtung zur Regelung der Temperatur installiert ist.

8.  Verfahren nach Anspruch 7, wobei der dritte Algorithmus (300) den Verschlusszustand des Flügels bestimmt, wenn die Umgebungstemperatur ($T_{amb}$) größer als oder gleich einer minimalen Referenz-Umgebungstemperatur ($T_{mini\_ref}$) ist, die nach einer Bestimmung des Öffnungszustand des Flügels zuzüglich einer Konstante (OFFSET_FF_A) während eines bestimmten Zeitintervalls (TPS_FF_A) gemessen wird.

9.  Verfahren nach einem der vorangehenden Ansprüche, wobei die Änderung des Sollwerts definiert ist:

    - von einem Benutzer,
    - von einem Steuerdraht,
    - von einem programmierten Gesetz,
    - in Abhängigkeit von der Feststellung eines Benutzers mittels eines Anwesenheitssensors,
    - in Abhängigkeit von einer Kombination der vorgenannten Kriterien.

10. Verfahren zur energetischen Steuerung einer Vorrichtung zur Regelung der Temperatur, wobei die Solltemperatur ($T_{cons}$) der Regelungsvorrichtung reduziert wird, wenn der Öffnungszustand eines Flügels mittels eines Verfahrens nach einem der Ansprüche 1 bis 9 festgestellt wird.

11. Vorrichtung zur Regelung der Temperatur, umfassend mindestens ein Heizelement, das ausgebildet ist, um von einer elektronischen Steuereinheit gesteuert zu sein, und einen Sensor der Umgebungstemperatur, wobei die elektronische Steuereinheit ausgebildet ist, um den Energieverbrauch der Vorrichtung durch Umsetzen des Verfahrens nach Anspruch 10 zu regulieren.

12. Vorrichtung zur Regelung der Temperatur nach Anspruch 11, ausgewählt aus:

- einem Heizgerät, vor allem einem elektrischen Heizgerät,
- einer Klimaanlage und
- einer Kombination dieser.

**Claims**

1. A method for determining the open state of a leaf in a room in which a heat regulating device is installed, comprising the following steps:

   - modifying a setpoint temperature ($T_{cons}$) of the heat regulating device;
   - determining a variation of said setpoint temperature ($T_{cons}$);
   - executing a first algorithm (400) for detecting the open state of a leaf if the setpoint temperature ($T_{cons}$) has increased during the modification step, the first algorithm (400) implementing at least one first criterion for determining the open state of a leaf in case of increase of the setpoint temperature ($T_{cons}$); or
   - executing a second algorithm (500) for detecting the open state of a leaf if the setpoint temperature ($T_{cons}$) has decreased during the modification step, the second algorithm (500) implementing at least one second criterion, for determining the open state of a leaf in case of decrease of the setpoint temperature ($T_{cons}$), the second criterion being different from the first criterion.

2. The method according to claim 1, wherein the first algorithm determines the open state of a leaf in the case where:

   - an ambient temperature ($T_{amb}$) decreases following the increase of the setpoint temperature ($T_{cons}$); and
   - the ambient temperature ($T_{amb}$) is lower than the setpoint temperature ($T_{cons}$).

3. The method according to claim 2, wherein the first algorithm determines the open state of a leaf in the case where the ambient temperature ($T_{amb}$) is below a maximum reference ambient temperature ($T_{maxi\_ref}$) measured after the increase in the setpoint temperature ($T_{cons}$), decreased by a first constant (OFFSET_FO_D).

4. The method according to claim 2 or 3, wherein the first algorithm determines the open state of a leaf in the case where the ambient temperature ($T_{amb}$) is lower than a maximum reference ambient temperature ($T_{maxi\_ref}$) measured after the increase of the setpoint temperature ($T_{cons}$), decreased by a second constant (OFFSET_FO_A), during a predetermined time interval (TPS_FO_A).

5. The method according to any one of the preceding claims, wherein the second algorithm determines the open state of the leaf in the case where:

   - the ambient temperature ($T_{amb}$) is less than or equal to the setpoint temperature ($T_{cons}$) decreased by a third constant (OFFSET_FO_B); and
   - the ambient temperature ($T_{amb}$) is below a minimum ambient temperature ($T_{mini\_ref}$) measured after the decrease of the setpoint temperature ($T_{cons}$), decreased by a fourth constant (OFFSET_FO_E), during a predetermined time interval (TPS_FO_B).

6. The method according to any one of the preceding claims, wherein the second algorithm determines the open state of the leaf in the case where:

   - the ambient temperature is below the setpoint temperature ($T_{cons}$) decreased by a third constant (OFFSET_FO_B); and
   - the ambient temperature is below a minimum reference ambient temperature ($T_{mini\_ref}$) measured after the decrease of the setpoint temperature ($T_{cons}$), decreased by a fifth constant (OFFSET_FO_F).

7. The method according to any one of the preceding claims, further carrying out a third algorithm (300) for determining the closed state of a leaf in a room in which a heat regulating device is installed.

8. The method according to claim 7, wherein the third algorithm (300) determines the closed state of the leaf in the case where the ambient temperature ($T_{amb}$) is greater than or equal to a minimum reference ambient temperature ($T_{mini\_ref}$) measured after a determination of the open state of the leaf, increased by a constant (OFFSET_FF_A), during a predetermined time interval (TPS_FS_A).

9. The method according to any one of the preceding claims, wherein the modification of the setpoint is defined by:

   - a user;
   - a pilot wire;
   - a programming law;
   - the detection of a user via a presence sensor;
   - a combination of the above criteria.

10. An energy regulation method for a heat regulating device, wherein the setpoint temperature ($T_{cons}$) is reduced where the open state of a leaf is determined using a method according to any one of claims 1 to 9.

11. A heat regulating device comprising at least one heating element able to be controlled by an electronic control unit and an ambient temperature sensor, the electronic control unit being suitable for regulating the energy consumption of the device by carrying out the method according to claim 10.

12. The heat regulating device according to claim 11, chosen from among:

   - a heating device, in particular an electric heating device;
   - an air conditioner; and
   - a combination thereof.

*Fig. 1*

*Fig. 2*

*400*

*100*

*210*

CHANGE_CONS = VRAI

NON

*200*

OUI

*220*

$T_{amb} \geq T_{cons} -$ OFFSET_G

NON

OUI

*230*

FALL_CONS = VRAI
RISE_CONS = FAUX
$T_{amb-1} = T_{amb}$
$T_{mini\_ref} = T_{amb}$
CHANGE_CONS = FAUX

*240*

$T_{maxi\_ref} = T_{amb}$
$T_{amb-1} = T_{amb}$
CPT_FO_A = 0
RISE_CONS = VRAI
FALL_CONS = FAUX
CHANGE_CONS = FAUX

*Fig.3*

*12*

FIN

DÉBUT

*130, 330, 563*

FO = FAUX
FF = FAUX
INIT_DO = FAUX
INIT_FF = FAUX
CPT_FO_A = 0
CPT_FO_B = 0
TIMEOUT_FO = FAUX
CHANGE_CONS = VRAI
INIT_GLITCH = FAUX

*Fig.8*

FIN

*Fig.4*

Fig.5

*Fig.6*

*Fig.7*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2812073 A
- FR 2871332 A
- FR 2930055
- FR 2440580
- EP 1160552 A1